# EUROPÄISCHE PATENTANMELDUNG

(11) **EP 1 749 638 A1**
(43) Veröffentlichungstag der Anmeldung: **07.02.2007**
(21) Anmeldenummer: 05016873.1
(22) Anmeldetag: 03.08.2005
(51) Int. Cl.: B29C 47/92, G01B 17/00, G01B 7/312

(54) **Vorrichtung zur Wanddickenbestimmung extrudierter Stränge**

(71) Anmelder: ZUMBACH ELECTRONIC AG, CH-2552 Orpund (CH)
(72) Erfinder: Gisiger, Jean-Claude, 2502 Biel (CH); Iseli, Heinz, 3293 Dotzigen (CH)
(74) Vertreter: Köster, Hajo

(57) **Zusammenfassung**

Bereitgestellt wird eine Vorrichtung zur Bestimmung verschiedener Parameter von extrudierten Strängen (2), insbesondere der Wanddicke von Kunststoffrohren,
mit einem stationären, in etwa plattenförmigen oder scheibenförmigen Rahmen (4) mit einer Öffnung (5), durch die der extrudierte Strang (2) entlang der Längsachse (6) der Vorrichtung (1) hindurchgeführt wird und mit mehreren Messköpfen (3), die um die Öffnung (5) herum verteilt auf einer (14) der Stirnwände des Rahmens (4) angeordnet und dort radial bezüglich der Längsachse (6) verstellbar geführt sind.

Diese Vorrichtung besitzt eine Verstelleinrichtung, die alle Messköpfe (3) synchron sowie symmetrisch zur Längsachse (6) um den gleichen radialen Weg verschiebt.

## Beschreibung

Die Erfindung betrifft eine Vorrichtung zur Bestimmung verschiedener Parameter von extrudierten Strängen, insbesondere der Wanddicke von Kunststoffrohren, mit einem stationären, in etwa plattenförmigen oder scheibenförmigen Rahmen mit einer Öffnung, durch die der extrudierte Strang entlang der Längsachse der Vorrichtung hindurchgeführt wird und mit mehreren Messköpfen, die um die Öffnung herum verteilt auf einer der äußeren Stirnwände des Rahmens angeordnet und dort radial bezüglich der Längsachse verstellbar geführt sind.

Seit Jahrzehnten sind zahlreiche Vorrichtungen zur Bestimmung und Vermessung der verschiedensten Parameters von extrudierten Strängen bekannt. So beschreibt beispielsweise die CH 523 488 eine Vorrichtung zur Messung der Lage eines Leiters in einem Kabel. Das Kabel wird dabei durch diese Vorrichtung hindurchgeführt.

In der CH 677 401 A5 sind ein Verfahren und eine Vorrichtung zur Ultraschallmessung der Wandstärke eines Kabels mit mehreren Messköpfen beschrieben.

Es existieren zudem zahlreiche weitere Druckschriften, welche sich mit Vorrichtungen zur Messung verschiedener Parameter von extrudierten Produkten befassen. Diesen bekannten Vorrichtungen ist gemein, dass die zu messenden extrudierten Produkte durch die Vorrichtung hindurchgezogen werden und mit Hilfe von Messköpfen oder Messsonden vermessen werden. Zu den bestimmbaren Parametern zählen beispielsweise die Wandstärke, der Durchmesser, die Lage der in den extrudierten Produkten befindlichen Leiter etc. Die Messung kann dabei mit Hilfe von beispielsweise Ultraschall oder auf induktivem bzw. optischem Wege erfolgen. Selbstverständlich sind die zur Anwendung gebrachten Messköpfe dann entsprechend ausgestattet.

Weitere Parameter, die mit entsprechend geeigneten Messköpfen ermittelt werden können, sind die Exzentrizität und die Konzentrizität von Leitern in Kabeln.

Je nach Anwendungsgebiet arbeiten die zur Anwendungen gebrachten Messköpfe und Messsonden dabei entweder berührungslos oder liegen an dem zu vermessenden extrudierten Produkt an.

In Extrudieranlagen für Kunststoffrohre ist in Produktionsrichtung üblicherweise hinter dem Extruder eine Kühlstrecke aus mehreren Kühlkammern angeordnet. Der Eingang der ersten, unter Unterdruck stehenden Kühlkammer wird dabei von einer Kalibrierhülse gebildet, in der der Kunststoffstrang in seinen Außenmaßen auf Sollmaß kalibriert wird.

Um in ein und derselben Extrudieranlage Kunststoffstränge mit unterschiedlichem Außendurchmesser produzieren zu können, ist es bekannt, entweder die Kalibrierhülse auszuwechseln oder eine Kalibrierhülse einzusetzen, deren Durchmesser stufenlos einstellbar ist. Eine derartige stufenlos einstellbare Kalibrierhülse wird beispielsweise in der DE 103 18 137 B3 beschrieben. Wird nun bei einer solchen Extrudieranlage der Außendurchmesser des extrudierten Kunststoffrohres verändert, dann ist es auch erforderlich, die Messköpfe in der in Produktionsrichtung nachgeschalteten Messvorrichtung zur Bestimmung beispielsweise der Wandstärke des Kunststoffrohres zu verstellen, um den geänderten Dimensionen des zu vermessenden Produktes Rechnung zu tragen.

Zu diesem Zwecke ist es bereits bekannt, die Messköpfe in einer derartigen Messvorrichtung in radialer Richtung verschiebbar auszugestalten. Mit anderen Worten, die Messköpfe können in dieser Vorrichtung radial nach außen bzw. radial nach innen verschoben werden und in der gewünschten Position in Abhängigkeit von den Dimensionen des zu vermessenden Produktes fixiert werden. Wenn in diesem Zusammenhang von "radialer Richtung" die Rede ist, dann bedeutet dies, dass die Messköpfe in Richtung des Durchmessers bzw. Radius verschoben und in der gewünschten Position fixiert werden können.

Allerdings ist es in diesem Fall erforderlich, jeden Messkopf einzeln zu verschieben und dafür Sorge zu tragen, dass die einzelnen Messköpfe den gleichen Abstand von dem zu vermessenden Produkt besitzen, um eine möglichst hohe Messgenauigkeit zu erzielen.

Aufgabe der vorliegenden Erfindung ist es, eine gattungsgemäße Vorrichtung bereit zu stellen, bei der die Verstellung der Messköpfe auf einfache und sichere Weise erfolgt. Zudem soll diese Messvorrichtung bei laufender Produktionslinie eingebaut werden können.

Gelöst wird diese Aufgabe durch eine Vorrichtung gemäß der Lehre der Ansprüche.

Mit der erfindungsgemäßen Vorrichtung können die verschiedensten Parameter von extrudierten Produkten bestimmt werden. Die Art der bestimmten Parameter hängt dabei von den zur Anwendung gebrachten Messköpfen ab. Die Messung kann z.B. mittels Ultraschall sowie induktiv oder optisch erfolgen. Die Produkte können dabei aus Kunststoff, Glas oder Metall bestehen.

Die erfindungsgemäße Vorrichtung wird insbesondere bei der Extrusion von Rohren, Schläuchen, Profilen und Kabelmänteln eingesetzt. Insbesondere werden Produkte mit zentral-symmetrischem Querschnitt vermessen.

Aus Gründen der einfacheren Darstellbarkeit wird die erfindungsgemäße Vorrichtung nachstehend an Hand der Messung der Wandstärke von extrudierten Kunststoffrohren oder Kunststoffsträngen näher beschrieben. Diese Ausführungen stehen jedoch stellvertretend für alle anderen Arten von mit derartigen Vorrichtungen bestimmbaren Parametern und zu vermessenden Produkten.

Die erfindungsgemäße Vorrichtung besitzt einen stationären, in etwa plattenförmigen oder scheibenförmigen Rahmen mit einer Öffnung, durch die der extrudierte Strang, beispielsweise ein Kunststoffrohr, entlang der Längsachse der Vorrichtung durch diese hindurchgeführt wird.

Ein derartiger Rahmen umgrenzt die genannte Öffnung und spannt eine Ebene auf. Die Längsachse der Vorrichtung verläuft dabei senkrecht zu dieser aufgespannten Ebene.

Auf die Form der Öffnung kommt es dabei im wesentlichen nicht an. Zweckmäßigerweise besitzt die Öffnung jedoch eine Kreisform. Der extrudierte Strang wird dann zweckmäßigerweise derart geführt, dass die zentrale Längsachse des Stranges mit dem Mittelpunkt des Kreises zusammenfällt. Der Strang wird somit vorzugsweise zentral und mittig durch die Öffnung geführt, kann jedoch auch versetzt dazu geführt werden.

Auch auf die Außenkontur des Rahmens kommt es nicht an. Zweckmäßigerweise besitzt dieser Scheibenform.

Auf einer Stirnwand des Rahmens sind mehrere Messköpfe angeordnet, die um die Öffnung herum verteilt angeordnet und dort radial bezüglich der Längsachse verstellbar geführt sind. Diese Messköpfe können in der gewünschten radialen Position fixiert werden.

Durch die gleichzeitige Verschiebung aller Messköpfe um den gleichen radialen Weg ist eine einfache synchrone, zentralsymmetrische Verstellung der Messköpfe möglich.

Nach einer bevorzugten Ausführungsform ist die Öffnung mittig und zentral in dem Rahmen angeordnet. Die Messköpfe, von denen sich vorzugsweise jeweils zwei diametral gegenüberliegen, sind dabei vorzugsweise gleichmäßig auf den Umfang eines Kreises um die Längsachse angeordnet, wobei dieser Kreis vorzugsweise konzentrisch zur Längsachse verläuft.

Nach einer bevorzugten Ausführungsform ist die Verstelleinrichtung mit einer Ringscheibe ausgestattet, die um die Längsachse konzentrisch umläuft. Die Ringscheibe ist dabei um diese Längsachse drehbar an oder in dem Rahmen angebracht und geführt, worauf nachstehend noch näher eingegangen wird. Zudem weist die Ringscheibe auf ihrer zu den Messköpfen zeigenden Stirnfläche mehrere Längsnuten auf, die auf dem Umfang der Ringscheibe verteilt angeordnet sowie zu den Messköpfen hin offen sind. Die Längsnuten verlaufen schräg zur radialen Richtung. Ferner sind in dem Rahmen radial verlaufende durchgehende Langlöcher vorgesehen, durch die sich ein Stift erstreckt, der von den Messköpfen ausgeht und mit seinem dem Messkopf gegenüber liegenden Ende in eine dieser Längsnuten in der drehbaren Ringscheibe eingreift. Dieser Stift ist sowohl in dem Langloch als auch in der Längsnut verschiebbar geführt. Der Kreuzungspunkt von Langloch und Längsnut bestimmt die Position des Stiftes und folglich auch des damit verbundenen Messkopfes.

Durch Drehen der Ringscheibe wird eine der Seitenwände der Längsnuten gegen den Außenmantel des Stifts gedrückt. Die Seitenwand der Längsnut stellt dabei eine Art Rampe dar, auf der der Stift entlang gleitet. Da der Stift jedoch durch das sich radial erstreckende Langloch hindurchragt, kann er je nach Drehrichtung der Ringscheibe nur eine radial gerichtete Bewegung nach radial außen oder nach radial innen durchführen und nimmt dabei den damit verbundenen Messkopf mit bzw. verschiebt ihn lediglich in radialer Richtung. Da alle Längsnuten vorzugsweise gleich ausgebildet sind, werden alle Stifte und somit auch alle damit verbundenen Messköpfe um den gleichen Betrag in radialer Richtung verschoben. Der Durchmesser des Stiftes und die Breite der Längsnut sowie des radialen Langloches müssen natürlich aufeinander abgestimmt sein, damit das Spiel des Stiftes dort möglichst gering ist.

Die Längsnuten können sich z.B. gerade erstrecken. Dies bedeutet mit anderen Worten, dass das Langloch und die dazugehörige Längsnut in axialer Aufsicht eine Art Kreuz bilden.

Nach einer bevorzugten Ausführungsform erstrecken sich die Längsnuten entlang dem Segment einer Kreisbahn oder Spiralbahn und insbesondere bevorzugt entlang dem Segment einer archimedischen Spirale. Der Mittelpunkt der Kreisbahn darf natürlich nicht mit der Längsachse zusammenfallen, da es sich dann ja um eine zur Längsachse konzentrische Kreisbahn handeln würde und diese Kreisbahn nicht schräg zum sich radial erstreckenden Langloch angeordnet wäre. Auch der Mittelpunkt der Spiralbahn sollte von der Längsachse entfernt sein.

Verlaufen die Längsnuten entlang dem Segment einer archimedischen Spirale, dann bewirkt dies folgendes: Jede Drehung der Ringscheibe um einen bestimmten Winkelbetrag führt zu einer damit genau korrelierenden radialen Verschiebung der Messköpfe und zwar unabhängig davon, an welcher Stelle der Längsnut sich der darin geführte Stift befindet. Mit anderen Worten, das Verdrehen der Ringscheibe um einen bestimmten Winkel steht unabhängig von der jeweiligen Ausgangsstellung des Stiftes in einem direkten linearen Verhältnis zur radialen Verschiebung der Messköpfe. So kann eine Vorrichtung beispielsweise derart ausgestaltet sein, dass ein Verdrehen um 2° eine radiale Verschiebung von 1 mm bewirkt.

Die Drehung der Ringscheibe kann manuell oder motorisch bewirkt werden. So kann ein Motor beispielsweise an einem Verstellring für die Ringscheibe oder direkt an der Ringscheibe ansetzen.

Nach einer weiterhin bevorzugten Ausführungsform sind der Rahmen und die drehbare Ringscheibe jeweils in ein mit der Vorrichtung verbundenes erstes Rahmensegment bzw. Ringscheibensegment und in ein abtrennbares, aus der Vorrichtung herausnehmbares zweites Rahmensegment bzw. Ringscheibensegment derart unterteilt, dass bei Herausnahme der beiden zweiten Segmente die Öffnung von radial außen zugänglich ist. Auf diese Weise ist es möglich, die erfindungsgemäße Vorrichtung in eine Produktionslinie bei laufendem Betrieb einzusetzen, ohne den zu vermessenden Strang in die Öffnung der erfindungsgemäßen Vorrichtung einführen bzw. einfädeln zu müssen. Dies ist besonders wichtig in der Kabelfertigung, bei der das herzustellende Produkt nicht getrennt werden kann.

Das herausnehmbare zweite Rahmensegment und das herausnehmbare zweite Ringscheibensegment der drehbaren Ringscheibe bilden vorzugsweise eine gemeinsam zu handhabende Einheit. Somit sind weniger Arbeitsgänge nötig, um diese Einheit herauszunehmen und wieder einzusetzen.

Der Rahmen, die drehbare Ringscheibe und weitere Teile der Vorrichtung als solcher sowie der Messköpfe sind aus einem geeigneten Material und vorzugsweise aus einem Kunststoff gefertigt, bei dem es sich weiterhin bevorzugt um POM, beispielsweise um Delrin (Produktmarke der Firma Du Pont) handelt. Auf diese Weise werden korrosionsfreie Teile und Elemente zum Einsatz gebracht. Die erfindungsgemäße Vorrichtung ist daher weitgehend wartungsfrei und kann nicht nur in Luft sondern auch in Flüssigkeiten, beispielsweise Wasser, betrieben werden. Letztere Variante empfiehlt sich beim Einsatz von Ultraschall, da dann das Wasser als Kopplungsmedium dient. Die Ablagerungen von Kalk und Schlamm sind minimal und haften schlecht auf dem zum Einsatz gebrachten Kunststoff.

Die Erfindung wird im folgenden anhand der eine bevorzugte Ausführungsform darstellenden Zeichnungen näher beschrieben. Von den Figuren zeigen:
- Fig. 1: Eine Schnittansicht einer erfindungsgemäßen Vorrichtung,
- Fig. 2: eine Aufsicht in Richtung der Längsachse auf die erfindungsgemäße Vorrichtung, und zwar von links in der Fig. 1 auf die dort gezeigte Vorrichtung, wobei innen liegende Längsnuten und Langlöcher angedeutet sind.
- Fig. 3: eine Aufsicht in Richtung der Längsachse auf die in der Fig. 1 gezeigte Vorrichtung von rechts in der Fig. 1 im auseinandergenommenen Zustand und
- Fig. 4: eine Aufsicht auf eine zur Verstelleinrichtung gehörende Ringscheibe.

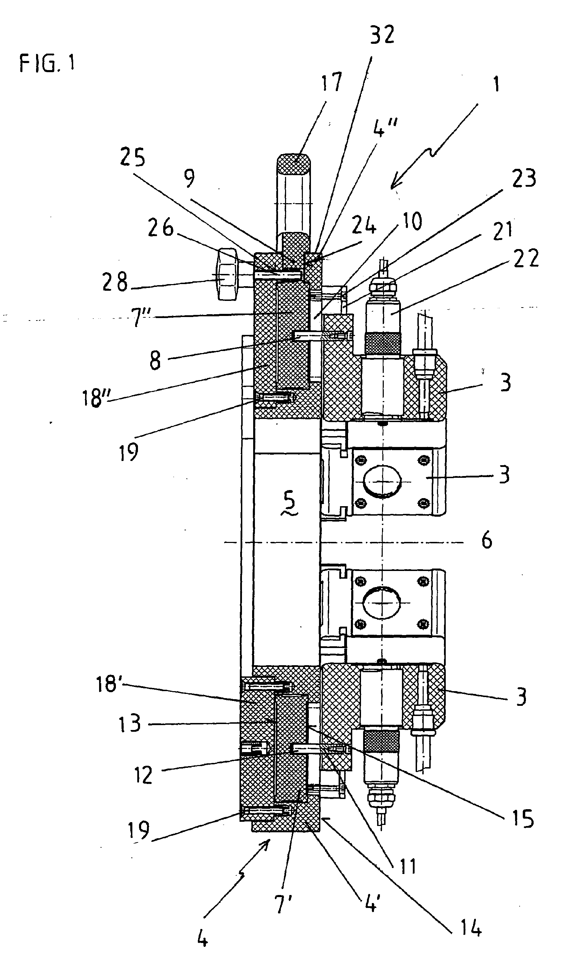

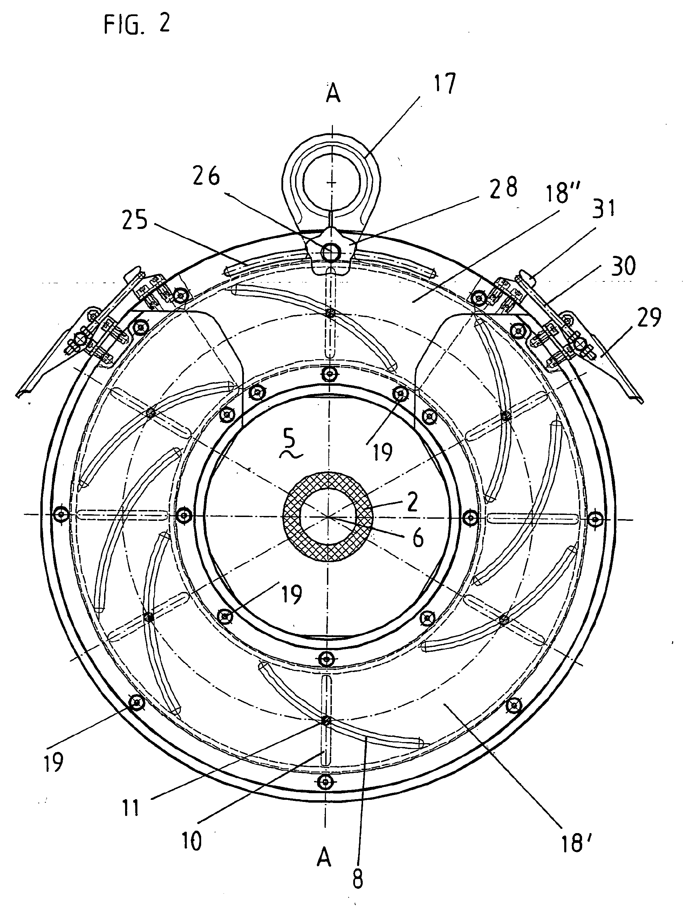

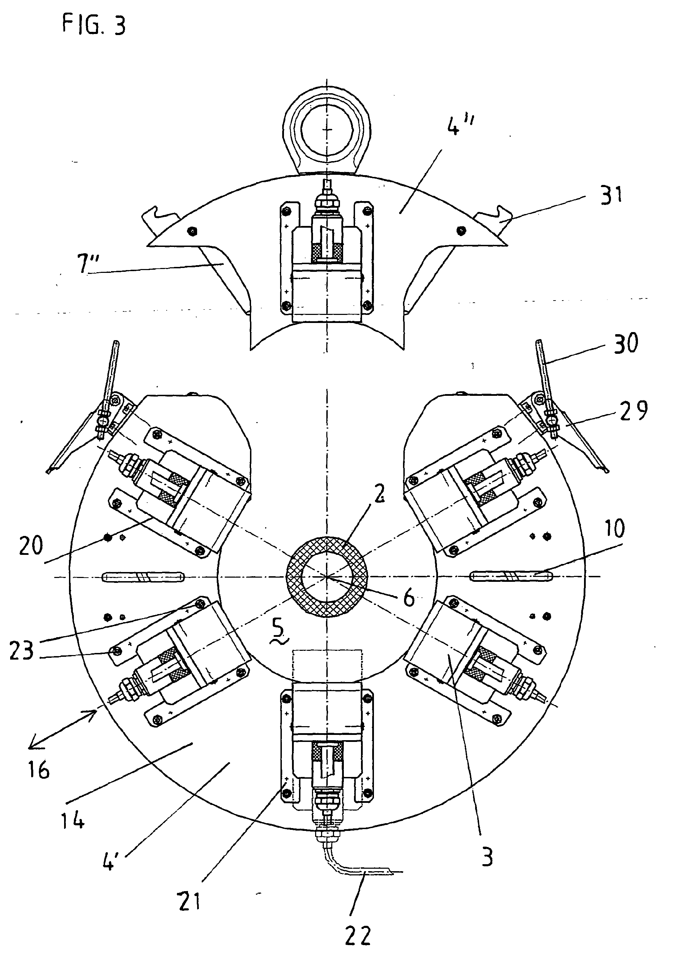

Die in der Fig. 1 im Querschnitt (entlang der Linie A-A der Fig. 2) gezeigte Vorrichtung 1 besitzt einen in etwa scheibenförmigen Rahmen 4, der eine in etwa kreisförmige Öffnung 5 einfasst und somit radial außen um diese Öffnung 5 umläuft. Die Längsachse 6 der Vorrichtung 1 verläuft senkrecht zu der von dem Rahmen 4 aufgespannten Ebene. Der extrudierte Strang 2 (Fig. 3) wird zweckmäßigerweise derart durch die Öffnung 5 geführt, dass sein Mittelpunkt (bezogen auf den Schnitt durch den Strang 2) mit der Längsachse 6 zusammenfällt.

Auf einer der Stirnwände 14 des Rahmens 4 sind insgesamt sechs Messköpfe 3 angebracht, die in radialer Richtung und somit in Richtung des Pfeils 16 (Fig. 3) verschiebbar geführt sind. Diese Messköpfe 3 sind gleichmäßig auf dem Umfang um die Öffnung 5 verteilt angeordnet.

Die Messköpfe 3 sind an ihren sich parallel zum Radius erstreckenden geraden Seitenrändern 20 in sich parallel dazu erstreckenden Schienen 21 verschiebbar geführt. Mit anderen Worten, sie stellen eine Art verschiebbaren Schlitten dar. Die Messköpfe 3 sind zudem mit den erforderlichen Messeinrichtung und Zuführungen 22 ausgestattet. Die Schienen 21 sind mit Schrauben 23 an dem Rahmen 4 befestigt.

Bei den Messköpfen 3 handelt es sich bei der gezeigten Ausführungsform um berührungslos messende Ultraschallmessköpfe bekannter Art, so dass es sich erübrigt, diese Messköpfe weiter zu erläutern.

In dieser Stirnwand 14 sind mehrere, radial verlaufende, durchgehende Langlöcher 10 vorhanden, deren Funktion weiter unten beschrieben ist. Insgesamt weist der in der Fig. 3 gezeigte Rahmen 4 acht derartige Langlöcher 10 auf, von denen sechs durch die dort gezeigten Messköpfe 3 verdeckt sind. Lediglich die zwei sich horizontal in der Fig. 3 erstreckenden Langlöcher 10 sind sichtbar, da diesen Langlöchern 10 kein Stift 11 und somit auch kein Messkopf 3 zugeordnet ist.

Die Zahl der Messköpfe 3 und natürlich auch der Langlöcher 10 kann entsprechend den Bedürfnissen und Anforderungen gewählt werden.

Bei dem Rahmen 4 der in den Figuren gezeigten Ausführungsform handelt es sich um einen Hohlrahmen, in dessen Innenraum 13 eine Ringscheibe 7 derart angebracht und geführt ist, dass sie sich um die Längsachse 6 drehen kann.

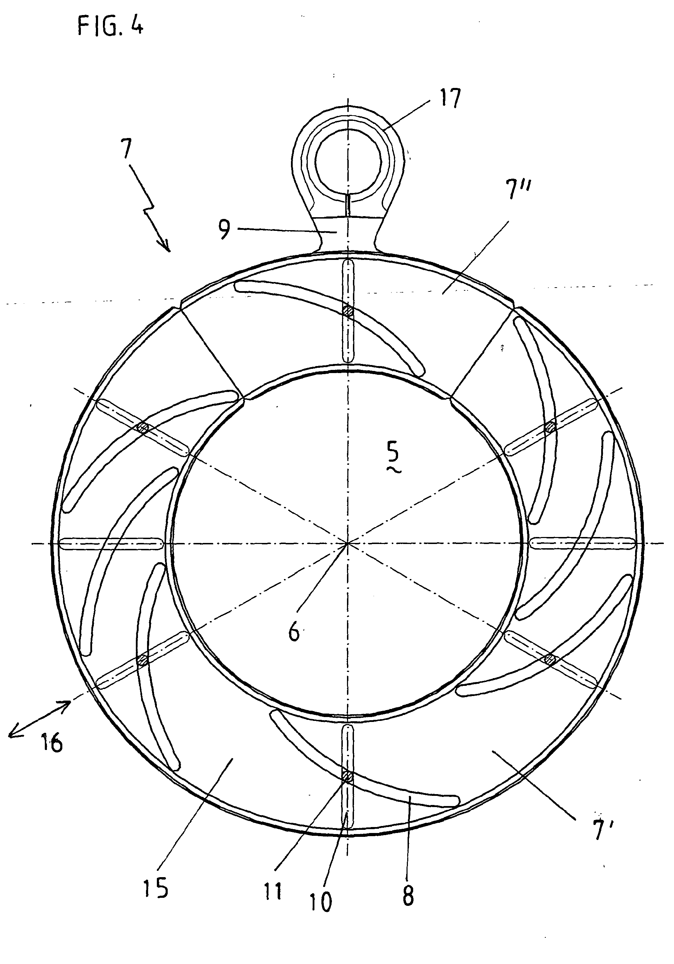

Die Ringscheibe 7 besteht aus einem ersten Ringsegment 7' und einem herausnehmbaren zweiten Ringsegment 7" (Fig. 4). An der Außenmantelfläche des Ringscheibensegments 7" ist ein sich nach radial außen erstreckender Verstellring 17 angebracht, dessen Funktion weiter unten beschrieben ist.

Die Ringscheibensegmente 7' und 7" bilden zusammen die durchgehende Ringscheibe 7. Das zweite Ringscheibensegment 7" ist dabei derart gestaltet, dass es nach radial außen aus der aus den beiden Ringscheibensegmenten 7' und 7" gebildeten Ringscheibe 7 herausnehmbar ist, so dass die beiden Ringscheibensegmenten 7' und 7" voneinander getrennt sind.

Die Ringscheibensegmente 7' und 7" sind an ihren aneinander anstoßenden Bereichen vorzugsweise form- und größenpassend ausgestaltet.

Auf der zu den Messköpfen 3 hin zeigenden Stirnfläche 15 der Ringscheibe 7 sind mehrere in etwa gleich ausgestaltete Längsnuten 8 ausgenommen bzw. vorhanden, die somit zu den Messköpfen 3 hin offen sind. Wenn hier davon die Rede ist, dass diese Längsnuten 8 gleich ausgestaltet sind, dann bezieht sich das auf die Dimensionen, Form und Krümmung.

Die Längsnuten 8 verlaufen schräg zur radialen Richtung bzw. zum Radius gemäß dem Pfeil 16 (Fig. 4). Sie erstrecken sich, in Aufsicht in Richtung der Längsachse 6 betrachtet, entlang dem Segment einer archimedischen Spirale.

Diese Längsnuten 8 wirken mit Stiften 11 zusammen, deren eines freie Ende 12 in diese Längsnuten 8 eingreift. Das andere Ende dieser Stifte 11 ist an den Messköpfen 3 befestigt. Alle Stifte 11 besitzen zweckmäßigerweise gleiche Dimensionen.

Wie man aus der Fig. 4 ersieht, ist die Ringscheibe 7 mit insgesamt acht Längsnuten 8 ausgestattet. Allerdings ragen nur in sechs dieser Längsnuten 8 ein Stift 11 hinein. Zwei Längsnuten 8 sind bei der in den Figuren gezeigten Ausführungsform ohne Funktion.

Wie bereits oben dargelegt, handelt es sich bei dem Rahmen 4 um einen Hohlrahmen. Der hohle Innenraum 13 entspricht hinsichtlich Form und Abmessungen in etwa der Form und den Abmessungen der Ringscheibe 7, so dass diese Ringscheibe 7 in diesem Hohlraum 13 zwar konzentrisch um die Längsachse 6 drehbar geführt und gelagert ist, jedoch über möglichst wenig Spiel in radialer und in axialer Richtung verfügt.

Um die Ringscheibe 7 in diesen Hohlraum 13 einsetzen zu können, besitzt der Rahmen 4 auf der der Stirnwand 14 gegenüberliegenden Seite bzw. Stirnfläche einen Ringdeckel 18, der mit sich axial erstreckenden Schrauben 19 an diesem Rahmen 4 befestigt ist und den Innenraum 13 verschließt. Auch dieser Ringdeckel 18 ist bei der gezeigten Ausführungsform in zwei Ringdeckelsegmente 18', 18" unterteilt, die wiederum zusammen einen durchgehenden Ringdeckel 18 bilden.

Der Verstellring 17 ist radial außen an der Ringscheibe 7 (genauer: zweiten Ringscheibensegment 7") befestigt. Dazu ist die Ringscheibe 7 mit einem sich radial nach außen aus dem Innenraum 13 erstreckenden Steg 9 ausgestattet, der durch einen Spalt 24 nach außen geführt ist und dort mit dem Verstellring 17 verbunden ist.

In dem Ringdeckel18 (genauer: Ringdeckelsegment 18") befindet sich ein durchgehendes Langloch 25, das sich entlang eines zur Längsachse 6 konzentrischen Kreissegmentes erstreckt und durch das sich von axial außen eine Gewindeschraube 26 erstreckt, die in eine Gewindebohrung 27 in dem Steg 9 eingreift. Die Gewindeschraube 26 ist axial außen mit einer Sterngriff 28 versehen. Wird diese Gewindeschraube 26 festgezogen, dann wird die Ringscheibe 7 in der eingestellten Position fixiert.

Wie insbesondere aus der Fig. 3 ersichtlich ist, ist der Rahmen 4 in ein erstes Rahmensegment 4' und in ein zweites Rahmensegment 4" unterteilt, die voneinander trennbar sind bzw. von denen das zweite Rahmensegment aus dem ersten Rahmensegment nach radial außen herausnehmbar ist. Die beiden Rahmensegmente 4' und 4" sind an ihren zueinander zeigenden bzw. an einander anstoßenden Bereichen form- und größenpassend ausgestattet. Das in dem zweiten Rahmensegment 4" befindliche zweite Ringscheibensegment 7" ragt an seinen sich in etwa radial erstreckenden Rändern, an denen es an das erste Ringscheibensegment 7' anstößt, etwas aus dem Rahmensegment 4" heraus, so dass das zweite Rahmensegment 4" beim Einsetzen in radialer Richtung in das erste Rahmensegment 4' eine Art Führung erfährt. Dies gilt jedoch nur für die in der Fig. 3 gezeigten Nullstellung der Ringscheibe 7. Ist die Ringscheibe 7 verdreht, dann ragt das zweite Ringscheibensegment 7" in den Innenraum 13 des ersten Rahmensegmentes 4' hinein, während gegenüberliegend das erste Ringscheibensegment 7' in den Innenraum 13 im zweiten Rahmensegment 4" hineinragt.

An dem ersten Rahmensegment 4' sind auf dessen äußerer Mantelfläche in der Nähe der Öffnung, die sich durch Herausnahme des zweiten Rahmensegmentes 4" ergibt, auf jeder Seite jeweils ein Spannhebel 29 angeordnet, der mittels eines Bügels 30 einen Haken 31 auf dem zweiten Rahmensegment 4' hintergreift und die aus dem zweiten Rahmensegment 4" und dem zweiten Ringscheibensegment 7" gebildete, gemeinsam handhabbare Einheit in gespanntem bzw. geschlossenen Zustand fest in das erste Rahmensegment 4' hereindrückt bzw. dort sichert.

Auf der Außenmantelfläche des zweiten Rahmensegmentes 4" ist im Bereich des Verstellringes 17 eine Skala 32 (Fig. 1) angebracht. Anhand dieser Skala kann abgelesen werden, um welchen Winkelbetrag der Verstellring 17 bezüglich der Achse A-A verschoben ist. Daraus ergibt sich dann auch die genaue radiale Position der Messköpfe 3.

Der Rahmen 4, die Ringscheibe 7, der Verstellring 17 und auch der Ringdeckel 18 sind aus einem Kunststoff, insbesondere Delrin gefertigt. Auch die anderen Teile der erfindungsgemäßen Vorrichtung 1 können, sofern dies aufgrund der zu erwartenden mechanischen Belastungen möglich ist, aus einem derartigen Kunststoff gefertigt sein. Die verschiedenen Schrauben, die Stifte 11 und der Spannhebel 29 zusammen mit dem Bügel 30 sind jedoch zweckmäßigerweise aus einem insbesondere korrosionsbeständigen Metall gefertigt.

### Bezugzeichenliste:

- 1: Vorrichtung
- 2: Strang
- 3: Messkopf
- 4: Rahmen
- 4',: erstes Rahmensegment
- 4": zweites Rahmensegment
- 5: Öffnung
- 6: Längsachse
- 7: drehbare Ringscheibe
- 7': erstes Ringscheibensegment
- 7": zweites Ringscheibensegment
- 8: Längsnut
- 9: Steg
- 10: Langloch
- 11: Stift
- 12: gegenüberliegendes Ende
- 13: Innenraum
- 14: äußere Stirnwand des Rahmens
- 15: Stirnfläche der Ringscheibe
- 16: Pfeil
- 17: Verstellring
- 18: Ringdeckel
- 18',: erstes Ringdeckelsegment
- 18": zweites Ringdeckelsegment
- 19: Schrauben
- 20: Seitenrand Messkopf
- 21: Schiene
- 22: Zuführung
- 23: Schraube
- 24: Spalt
- 25: Langloch
- 26: Gewindeschraube
- 27: Gewindebohrung
- 28: Sterngriff
- 29: Spannhebel
- 30: Bügel
- 31: Hacken
- 32: Skala

## Patentansprüche

1. Vorrichtung zur Bestimmung verschiedener Parameter von extrudierten Strängen (2), insbesondere der Wanddicke von Kunststoffrohren, mit einem stationären, in etwa plattenförmigen oder scheibenförmigen Rahmen (4) mit einer Öffnung (5), durch die der extrudierte Strang (2) entlang der Längsachse (6) der Vorrichtung (1) hindurchgeführt wird und mit mehreren Messköpfen (3), die um die Öffnung (5) herum verteilt auf einer (14) der Stirnwände des Rahmens (4) angeordnet und dort radial bezüglich der Längsachse (6) verstellbar geführt sind,
**gekennzeichnet durch**
eine Verstelleinrichtung, die alle Messköpfe (3) synchron sowie symmetrisch zur Längsachse (6) um den gleichen radialen Weg verschiebt.

2. Vorrichtung nach Anspruch 1, **gekennzeichnet durch** eines oder mehrere der folgenden Merkmale:
die Öffnung (5) ist mittig und zentral in dem Rahmen (4) angeordnet, die Messköpfe (3) sind gleichmäßig verteilt auf dem Umfang eines Kreises um die Längsachse (6) angeordnet und
der Kreis verläuft konzentrisch zur Längsachse (6).

3. Vorrichtung nach Anspruch 1 oder 2,
**dadurch gekennzeichnet, dass**
die Verstelleinrichtung eine um die Längsachse (6) konzentrisch umlaufende Ringscheibe (7) aufweist,
die Ringscheibe (7) um die Längsachse (6) drehbar an oder in dem Rahmen (4) angebracht und geführt ist und auf ihrer zu den Messköpfen (3) zeigenden Stirnfläche (15) mehrere, auf ihrem Umfang verteilt angeordnete, zu den Messköpfen (3) hin offene, schräg zur radialen Richtung verlaufenden, in etwa gleich ausgestaltete Längsnuten (8) aufweist,
in dem Rahmen (4) radial verlaufende durchgehende Langlöcher (10) angeordnet sind und
sich von den Messköpfen (3) jeweils ein fest damit verbundener Stift (11) durch ein Langloch (10) hindurch erstreckt und mit seinem dem Messkopf (3) gegenüberliegenden Ende (12) in eine der Längsnuten (8) in der drehbaren Ringscheibe (7) eingreift und in dieser Längsnut (18) verschiebbar geführt ist.

4. Vorrichtung nach Anspruch 3,
**dadurch gekennzeichnet, dass**
alle Längsnuten (8) gleich ausgebildet sind.

5. Vorrichtung nach Anspruch 3 oder 4,
**dadurch gekennzeichnet, dass**
sich die Längsnuten (8) gerade oder entlang dem Segment einer Kreisbahn oder Spiralbahn erstrecken.

6. Vorrichtung nach Anspruch 5,
**dadurch gekennzeichnet, dass**
sich die Längsnuten (8) entlang dem Segment einer archimedischen Spirale erstrecken.

7. Vorrichtung nach einem der Ansprüche 3 bis 6,
**dadurch gekennzeichnet, dass**
die drehbare Ringscheibe (7) mit einem von außen zugänglichen Verstellelement (17) ausgestattet ist, das sich insbesondere von der Ringscheibe (7) nach radial außen erstreckt.

8. Vorrichtung nach einem der Ansprüche 3 bis 7,
**dadurch gekennzeichnet, dass**
der Rahmen (4) und die drehbare Ringscheibe (7) jeweils in ein mit der Vorrichtung (1) verbundenes erstes Ringscheibensegment (7') bzw. Rahmensegment (4') und in ein abtrennbares, aus der Vorrichtung herausnehmbares zweites Ringscheibensegment (7") bzw. Rahmensegment (4") derart unterteilt sind, dass bei Herausnahme der beiden zweiten Segmente (4"; 7") die Öffnung (5) von radial außen zugänglich ist.

9. Vorrichtung nach Anspruch 8,
**dadurch gekennzeichnet, dass**
das herausnehmbare zweite Rahmensegment (4") und das herausnehmbare zweite Ringscheibensegment (7") eine gemeinsam handhabbare Einheit bilden.

10. Vorrichtung nach einem der vorhergehenden Ansprüche,
**dadurch gekennzeichnet, dass**
die Verstelleinrichtung mittels eines Motors bewegt wird.
